(19) Europäisches Patentamt / European Patent Office / Office européen des brevets

(11) **EP 3 965 052 B1**

(12) **EUROPEAN PATENT SPECIFICATION**

(45) Date of publication and mention
of the grant of the patent:
**16.08.2023  Bulletin 2023/33**

(21) Application number: **20194552.4**

(22) Date of filing: **04.09.2020**

(51) International Patent Classification (IPC):
*G06T 11/00* (2006.01)       *G06T 5/00* (2006.01)
*G06F 18/2413* (2023.01)     *G06N 3/045* (2023.01)
*G06N 3/047* (2023.01)       *G06N 3/088* (2023.01)
*G06V 10/26* (2022.01)       *G06V 10/764* (2022.01)
*G06V 10/772* (2022.01)

(52) Cooperative Patent Classification (CPC):
**G06T 11/001; G06F 18/2413; G06N 3/045;
G06N 3/047; G06N 3/088; G06T 5/006;
G06V 10/26; G06V 10/764; G06V 10/772**

(54) **DEVICE AND METHOD OF TRAINING A GENERATIVE NEURAL NETWORK**

VORRICHTUNG UND VERFAHREN ZUM TRAINIEREN EINES GENERATIVEN NEURONALEN NETZES

APPAREIL ET PROCÉDÉ D'ENTRAÎNEMENT D'UN RÉSEAU DE NEURONES GÉNÉRATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.03.2022  Bulletin 2022/10**

(73) Proprietor: **Robert Bosch GmbH
70442 Stuttgart (DE)**

(72) Inventors:
• **Khoreva, Anna
70197 Stuttgart (DE)**
• **Katiyar, Prateek
72074 Tuebingen (DE)**

(56) References cited:
**US-B1- 10 565 476**

• **XIHUI LIU ET AL: "Learning to Predict
Layout-to-image Conditional Convolutions for
Semantic Image Synthesis", ARXIV.ORG,
CORNELL UNIVERSITY LIBRARY, 201 OLIN
LIBRARY CORNELL UNIVERSITY ITHACA, NY
14853, 15 October 2019 (2019-10-15),
XP081575876,**
• **Taesung Park ET AL: "Semantic Image Synthesis
With Spatially-Adaptive Normalization",
arxiv.org, 18 March 2019 (2019-03-18), pages 1-19,
XP055749724, DOI: 10.1109/CVPR.2019.00244
Retrieved from the Internet:
URL:https://arxiv.org/pdf/1903.07291v1.pdf
[retrieved on 2020-11-12]**
• **WANG TING-CHUN ET AL: "High-Resolution
Image Synthesis and Semantic Manipulation with
Conditional GANs", 2018 IEEE/CVF
CONFERENCE ON COMPUTER VISION AND
PATTERN RECOGNITION, IEEE, 18 June 2018
(2018-06-18), pages 8798-8807, XP033473804,
DOI: 10.1109/CVPR.2018.00917 [retrieved on
2018-12-14]**

**Description**

Various embodiments generally relate to a device and a method of training a generative neural network.

By way of example, machine learning image classifiers may be used in various systems to classify digital images. For example, in autonomous driving, imaging sensors, such as camera sensors and/or video sensors, may be used to provide digital images of the surroundings of a vehicle (e.g., illustrating objects, such as cars, bicycles, pedestrians, street signs etc.); a machine learning image classifier may be used to classify the detected digital images and the vehicle may be controlled using the classified digital images. In order to train a machine learning image classifier, digital images covering a broad range of the classification task (e.g., various driving scenes, e.g., various objects) may be necessary. However, it may be difficult to acquire digital images showing corner cases, such as near-accident driving scenes, and/or digital images showing rare classes associated with rare objects (e.g., wild animals). Further, the use of some acquired digital images may be prohibited due to privacy reasons (e.g., digital images showing people). Thus, it may be necessary to synthetically generate digital images (e.g., to augment data) for training machine learning image classifiers.

In Verma et al., Manifold mixup: Better representations by interpolating hidden states, Proceedings of the 36th International Conference on Machine Learning, p.6438-6447, 2019, a method to create augmented images by mixing samples from different classes and interpolating their labels is described.

In Antoniou et al., Data augmentation generative adversarial networks, arXiv:1711.04340, 2017, a method of generating augmented images using a generative adversarial network is described.

In Arjovsky et al., Towards principled methods for training generative adversarial networks, International Conference on Learning Representations, 2017, an augmentation method is described, wherein the training stability of a generative adversarial network is improved by adding noise to the images.

However, a generative neural network, which has been trained to generate a synthetic image for a semantic segmentation image may not be capable to generate detailed synthetic images; for example, a generated synthetic image may include unsatisfactory artifacts and may lack local structures and/or details. Thus it may be necessary to provide a generative neural network capable of generating synthetic images that include local shapes and structural details.

The method and the device with the features of the independent claims 1 (first aspect of the invention) and 8 (second aspect of the invention) enable a generative neural network to be trained to generate a synthetic image for a digital image with improved local shapes and structural details.

A generative neural network may be any kind of neural network, which generates a synthetic image for a semantic segmentation image. For example, the generative neural network may include an encoder neural network and a decoder neural network. A neural network may include any number of layers and the training of the neural network, i.e. adapting the layers of the neural network, may be based on any kind of training principle, such as backpropagation, i.e. the backpropagation algorithm.

Using a distorted segmentation image to train a generative neural network may have the effect, that artifacts in synthetic images that are generated for segmentation images using the trained generative neural network are significantly reduces. For example, fine-grained structural details of digital objects shown in the synthetic image corresponding to semantic classes associated with segments in the segmentation image are improved. Further the perceptual realism of the synthetic image may be enhanced.

In an embodiment, the method may further include generating a training image using the trained generative neural network applied to a training segmentation image; and training an image classifier using the generated training image to classify the training image.

In a different embodiment, the method may further include generating a training image using the trained generative neural network applied to a training segmentation image; generating a classified image using a trained image classifier applied to the generated training image; and determining a performance of the trained image classifier using the generated classified image and the training segmentation image.

In an example, the edge image may be a binary image.

In an embodiment, selecting edge-pixels from the plurality of edge pixels may include selecting the edge-pixels from the plurality of edge pixels using a statistical probability distribution.

In a further embodiment, the two-dimensional distortion applied to the segmentation image may include a thin-plate spline transformation.

In another embodiment, selecting a second pixel for a first pixel may include adding a displacement to the position of the first pixel to determine the position of the second pixel.

In an example, the displacement may be determined using a probability distribution.

In a further example, the position of each second pixel may include a first position value and a second position value. The position of each first pixel may include a first position value and a second position value. Determining the position of a second pixel by adding a displacement to the position of the corresponding first pixel may include adding a first value determined by a first probability distribution to the first position value of the first pixel to determine the first position value of the second pixel, and adding a second value determined by a second probability distribution to the second position value of the first pixel to determine the second position value of the second pixel.

In an embodiment, training the generative neural network using the distorted segmentation image as input image to estimate the digital image may include: estimating the digital image using the generative neural network applied to the distorted segmentation image;
applying a first loss function to the estimated digital image and the digital image to determine a generative loss value; applying a second loss function to the estimated digital image and the edge image to determine an edge loss value; and training the generative neural network to reduce the generative loss value and the edge loss value.

Training the generative neural network by using the edge loss may have the effect, that the trained generative neural network may be capable to generate a synthetic image for a segmentation image such that the synthetic image includes structural details (e.g., class-specific structural details) that are missing in the segmentation image.

In an example, training the generative neural network using the distorted segmentation image as input image to estimate the digital image may include: estimating the digital image using the generative neural network applied to the distorted segmentation image; determining a probability of the estimated image being a real image; and training the generative neural network to increase probability.

In a further example, the probability of the estimated image being a real image may be a first probability determined using a discriminative neural network. Training the generative neural network using the distorted segmentation image as input image to estimate the digital image further include determining a second probability of the digital image being a real image using the discriminative model, and training the discriminative neural network using first probability and the second probability.

A computer program includes instructions which, if executed by a computer, make the computer perform the method according to the first aspect of the invention or any one of the embodiments and examples described above. The computer program mentioned in this paragraph provides a third aspect of the invention.

A computer readable medium stores instructions which, if executed by a computer, make the computer perform the method according to the first aspect of the invention or any one of the embodiments and examples described above. The computer readable medium mentioned in this paragraph provides a fourth aspect of the invention.

Various embodiments of the invention are described with reference to the following drawings, in which:

Figure 1       show a device according to various embodiments;
Figure 2A     shows a processing system for generating training data, according to various embodiments;
Figure 2B     shows a processing system for generating training data, according to various embodiments;
Figure 2C     shows a processing system for training a generative neural network according to various embodiments;
Figure 2D     shows a processing system for training a generative neural network according to various embodiments;
Figure 3A     shows an exemplary edge image according to various embodiments;
Figure 3B     shows an exemplary segmentation image according to various embodiments;
Figure 3C     shows an exemplary segmentation image according to various embodiments;
Figure 3D     shows an exemplary distorted segmentation image according to various embodiments;
Figure 3E     shows exemplary segmentation images and corresponding distorted segmentation images, according to various embodiments;
Figure 4       shows a method of training a generative neural network according to various embodiments;
Figure 5A     shows a processing system for training an image classifier using a trained generative neural network, according to various embodiments;
Figure 5B     shows a processing system for testing a trained image classifier using a trained generative neural network, according to various embodiments.

In an embodiment, a "computer" may be understood as any kind of a logic implementing entity, which may be hardware, software, firmware, or any combination thereof. Thus, in an embodiment, a "computer" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "computer" may also be software being implemented or executed by a processor, e.g. any kind of computer program, e.g. a computer program using a virtual machine code such as e.g. Java. Any other kind of implementation of the respective functions which will be described in more detail below may also be understood as a "computer" in accordance with an alternative embodiment.

In the field of computer vision image classifiers are applied to classify images (e.g., to perform a semantic image segmentation) and various systems may be controlled based on the classified images. However, to train a machine learning image classifier, a large amount of images showing all kind of objects to be classified, classification tasks, etc. are necessary. Thus, it may be necessary to provide a generative neural network that is capable to generate images for training a machine learning image classifier. Illustratively, a generative neural network is trained to generate an image for a segmentation image, wherein the generated image includes local shapes and structural details.

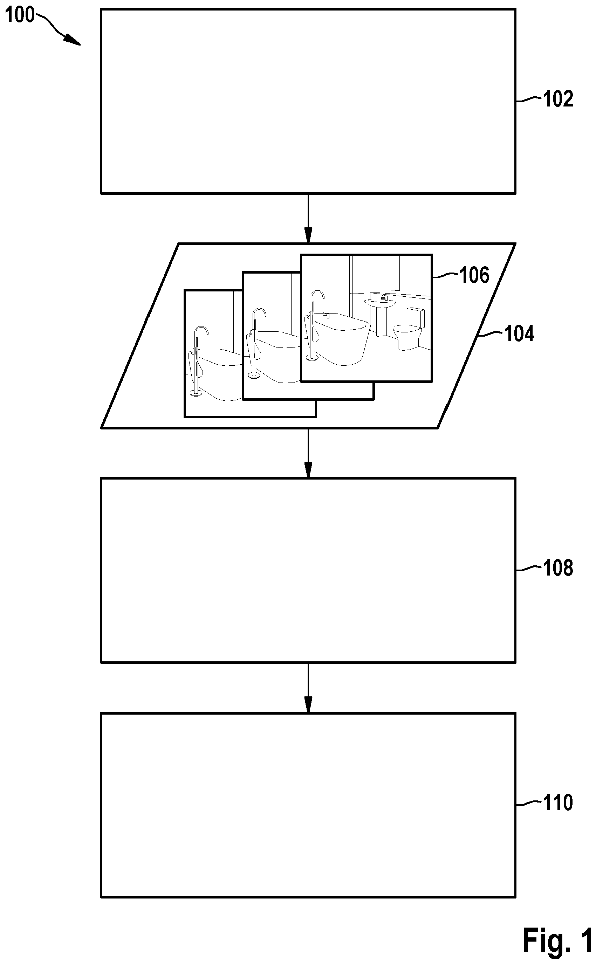

**FIG. 1** shows a device 100 according to various embodiments. The device 100 may include one or more sensors 102. The sensor 102 may be configured to provide digital images, for example a plurality of digital images 104 including the digital image 106. The sensor 102 may be any kind of sensor, which is capable of providing digital images, for example an imaging sensor, such as a camera sensor or a video sensor, a radar sensor, a LiDAR sensor, an ultrasonic sensor, a motion sensor, a thermal sensor, etc. The one or more sensors 102 may include a plurality of sensors, which may be of the same type of sensor or of different sensor types. The device 100 may further include a memory device 108. The memory device 108 may include a memory which is for example used in the processing carried out by a computer. A memory used in the embodiments may be a volatile memory, for example a DRAM (Dynamic Random Access Memory) or a nonvolatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory). The memory device 108 may be configured to store the plurality of digital images 104, such as the digital image 106, provided by the one or more sensors 102. The device 100 further includes a computer 110. The computer 110 may include one or more processors. The computer 110 may be any kind of kind of logic implementing entity, as described above. In various embodiments, the computer 110 may be configured to process the digital image 106.

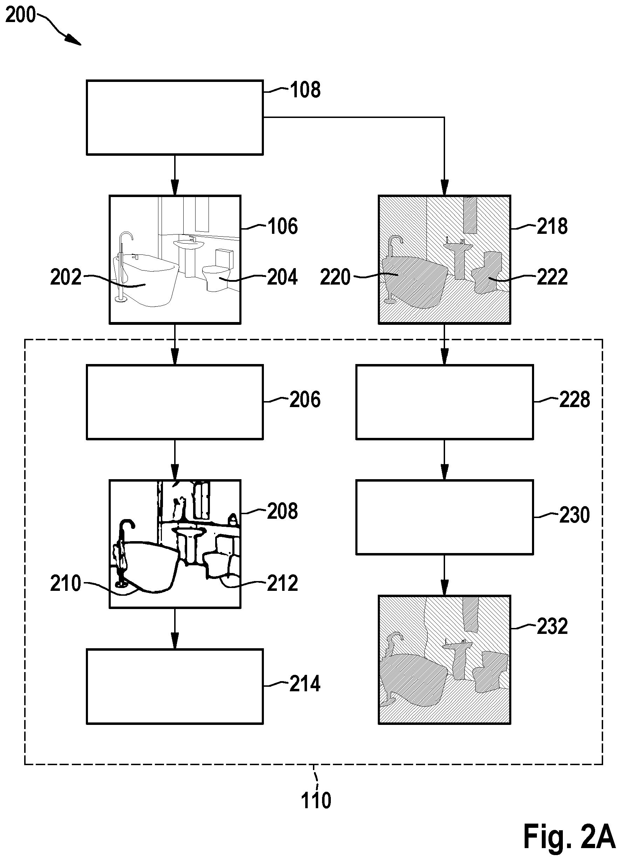

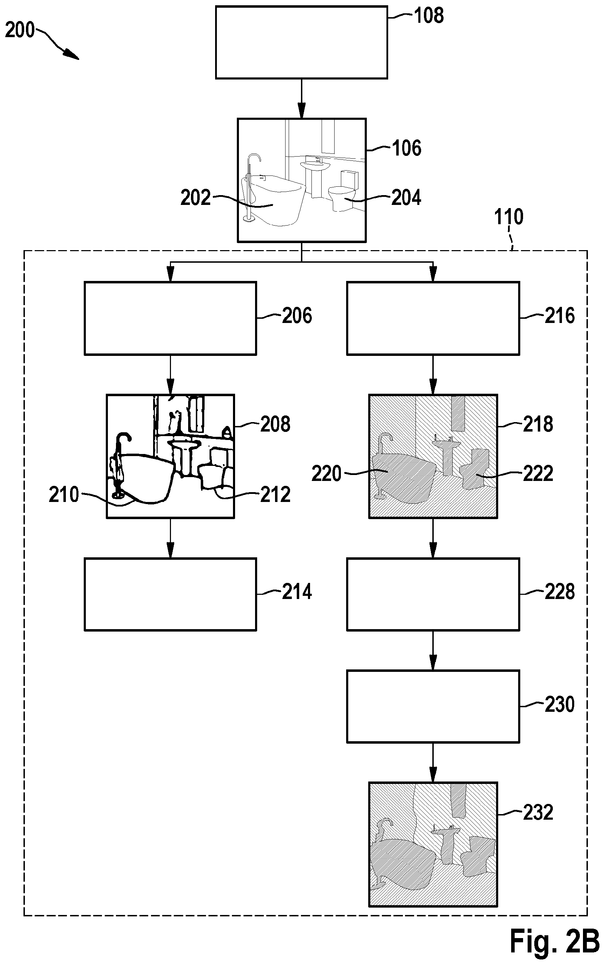

**FIG. 2A** and **FIG. 2B** each show a processing system 200 for generating training data, according to various embodiments. The processing system 200 may include the memory device 108. The memory device 108 may store the digital image 106. The digital image 106 includes one or more digital objects, such as a first digital object 202 and/or a second digital object 204. The digital image 106 may include a plurality of pixels and one or more pixels of the plurality of pixels may be associated with the one or more digital objects 202, 204. For example, one or more pixels of the plurality of pixels may be associated with the first digital object 202. For example, one or more pixels of the plurality of pixels may be associated with the second digital object 204. The processing system 200 further includes the computer 110. The computer 110 is configured to process the digital image 106.

The computer 110 is configured to perform an edge detection 206 for the digital image 106. According to various aspects, the computer 110 may be configured to implement at least a part of an edge detection model (e.g., an edge detection neural network). The edge detection model may be configured to perform the edge detection 206. The computer 110 may be configured to generate an edge image 208 by applying the edge detection 206 to the digital image 106. The edge image 208 includes a plurality of edge pixels determined as representing edges of the one or more digital objects 202, 204 in the digital image 106. For example, the edge image 208 may include one or more edge pixels 210 representing the edges of the first digital object 202 in the digital image 106. For example, the edge image 208 may include one or more edge pixels 212 representing the edges of the second digital object 204 in the digital image 106. Illustratively, the digital image 106 shows digital objects and each digital object may be defined by its edges (e.g., by its edges to a neighboring digital object). The edges of each digital object are represented by a plurality of edge pixels. According to various aspects, the edge image may include a binary image. For example, the edge image 208 may include a plurality of pixels including the plurality of edge pixels and a plurality of non-edge pixels. The number of pixels in the edge image 208 may be equal to the number of pixels in the digital image 106. The edge image 208 may be a binary image associated with a first pixel value and a second pixel value. Illustratively, the binary image may be black-and-white image and the first pixel value may be equal to "0" representing white and the second pixel value may be equal to "1" representing "black". Each of the plurality of edge pixels may have the first pixel value associated with the binary image and each of the plurality of non-edge pixels may have the second pixel value associated with the binary image, or vice versa.

The computer 110 is configured to select edge-pixels, e.g., the selected edge pixels 214, from the plurality of edge pixels. For example, the computer 110 may be configured to select one or more edge-pixels (e.g., some, e.g., all) from the plurality of edge pixels. The computer 110 may be configured to select the edge-pixels from the plurality of edge pixels using a statistical probability distribution. The computer 110 may be configured to select the edge-pixels from the plurality of edge pixels randomly. The term "random" or "randomly" as used herein may describe the use of any kind of probability distribution, such as a stochastic and/or statistical probability distribution. The term "random" or "randomly" may also include the use of any kind of random number generator. The random number generator may use any kind of algorithm and/or any kind of source (e.g., physical properties within a system) to generated a random number. A random selection of edge-pixels from the plurality of edge pixels may include that the selection of a subsequent edge-pixel is stochastically independent of a prior selected edge-pixel.

According to various aspects, a segmentation image 218 is provided using the digital image 106. The segmentation image 218 may be generated using the digital image 106. The segmentation image 218 includes one or more segments representing the one or more digital objects. Each segment of the one or more segments in the segmentation image 218 may represent a corresponding digital object of the one or more digital objects in the digital image 106. For example, a first segment 220 in the segmentation image 218 may represent the first digital object 202 in the digital image 106. For example, a second segment 222 in the segmentation image 218 may represent the second digital object 204 in the digital image 106.

According to some aspects, the memory device 108 may be configured to store the segmentation image 218 (see, for example, FIG. 2A). For example, the segmentation image 218 may be provided using the digital image 106 via a human class annotation (e.g., generating the segmentation image 218 by manually adding a corresponding class to each pixel in the digital image 106). According to some aspects, the computer 110 may be configured to perform an image segmentation 216 (e.g., a semantic image segmentation) for the digital image 106 to generate the segmentation image 218 (see, for example, FIG. 2B). The computer 110 may be configured to implement at least a part of an image segmentation model (e.g., an image segmentation neural network). The image segmentation model may be configured to perform the segmentation 216. The computer 110 may be configured to generate a segmentation image 218 (e.g., a semantic segmentation image) by applying the segmentation 216 to the digital image 106.

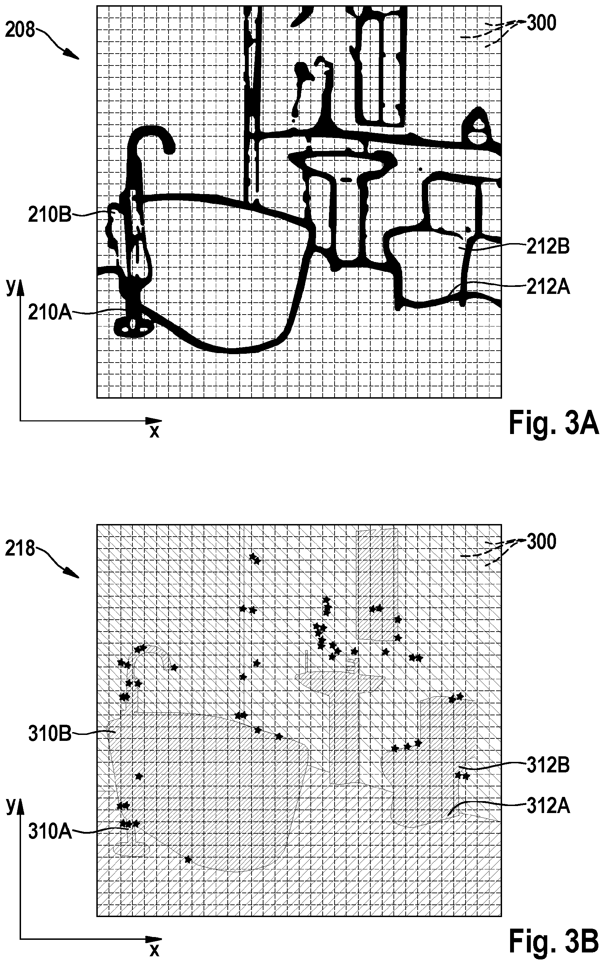

The segmentation image 218 includes a plurality of first pixels. The positions of the first pixels in the segmentation image 218 correspond to the positions of the selected edge-pixels 214 in the edge image 208. The number of pixels in the segmentation image 218 may be equal to the number of pixels in the digital image 106. An exemplary edge image 208 and an exemplary segmentation image 218 are shown in **FIG. 3A** and **FIG. 3B,** respectively. Each image described herein may include a plurality of pixels, e.g., a plurality of pixels 300. By way of illustration, the pixels of the plurality of pixels 300 are shown oversized (see FIGs. 3A to 3D). For example, an image as described herein may be a two-dimensional image. The position of a pixel may include a first position value (e.g., an x-coordinate value) and a second position value (e.g., a y-coordinate value). The edge image 208 may include one or more edge pixels 210 representing the edges of the first digital object 202 in the digital image 106. With respect to FIG. 3A, the selected edge-pixels 214 may include a first selected edge-pixel 210A selected from the one or more edge pixels 210 representing the edges of the first digital object 202 in the digital image 106. For example, the selected edge-pixels 214 may include a second selected edge-pixel 210B selected from the one or more edge pixels 210 representing the edges of the first digital object 202 in the digital image 106. The edge image 208 may include one or more edge pixels 212 representing the edges of the second digital object 204 in the digital image 106. For example, the selected edge-pixels 214 may include a third selected edge-pixel 212A selected from the one or more edge pixels 212 representing the edges of the second digital object 204 in the digital image 106. For example, the selected edge-pixels 214 may include a fourth selected edge-pixel 212B selected from the one or more edge pixels 212 representing the edges of the second digital object 204 in the digital image 106. As described above, the segmentation image 218 includes the plurality of first pixels and the positions of the first pixels of the plurality of first pixels correspond to the positions of the selected edge-pixels 214 in the edge image 208. With respect to FIG. 3B, the segmentation image 218 may include a first pixel 310A corresponding to the first selected edge-pixel 210A selected from the one or more edge pixels 210. The position of the first pixel 310A may correspond to the position of the first selected edge-pixel 210A. For example, the first position value of the first pixel 310A may correspond to the first position value of the first selected edge-pixel 210A and the second position value of the first pixel 310A may correspond to the second position value of the first selected edge-pixel 210A. Illustratively, the x-coordinate of the first pixel 310A may be equal to the x-coordinate of the first selected edge-pixel 210A and the y-coordinate of the first pixel 310A may be equal to the y-coordinate of the first selected edge-pixel 210A. The segmentation image 218 may include a second pixel 310B corresponding to the second selected edge-pixel 210B selected from the one or more edge pixels 210. The position of the second pixel 310B may correspond to the position of the second selected edge-pixel 210B. For example, the first position value of the second pixel 310B may correspond to the first position value of the second selected edge-pixel 210B and the second position value of the second pixel 310B may correspond to the second position value of the second selected edge-pixel 210B. Illustratively, the x-coordinate of the second pixel 310B may be equal to the x-coordinate of the second selected edge-pixel 210B and the y-coordinate of the second pixel 310B may be equal to the y-coordinate of the second selected edge-pixel 210B. The segmentation image 218 may include a third pixel 312A corresponding to the third selected edge-pixel 212A selected from the one or more edge pixels 212. The position of the third pixel 312A may correspond to the position of the third selected edge-pixel 212A. For example, the first position value of the third pixel 312A may correspond to the first position value of the third selected edge-pixel 212A and the second position value of the third pixel 312A may correspond to the second position value of the third selected edge-pixel 212A. The segmentation image 218 may include a fourth pixel 312B corresponding to the fourth selected edge-pixel 212B selected from the one or more edge pixels 212. The position of the fourth pixel 312B may correspond to the position of the fourth selected edge-pixel 212B.

With respect to FIG. 2A and FIG. 2B, the computer 110 is configured to select one or more second pixels for each first pixel in the segmentation image 218. The computer 110 may be configured to select the selected second pixels 228 for the first pixels randomly. The computer 110 may be configured to select a second pixel for a first pixels by adding a displacement to the position of the first pixel to determine the position of the second pixel. For example, the computer 110 may be configured to add a displacement to the position of the first pixel to determine the position of the second pixel randomly, e.g., using a probability distribution.

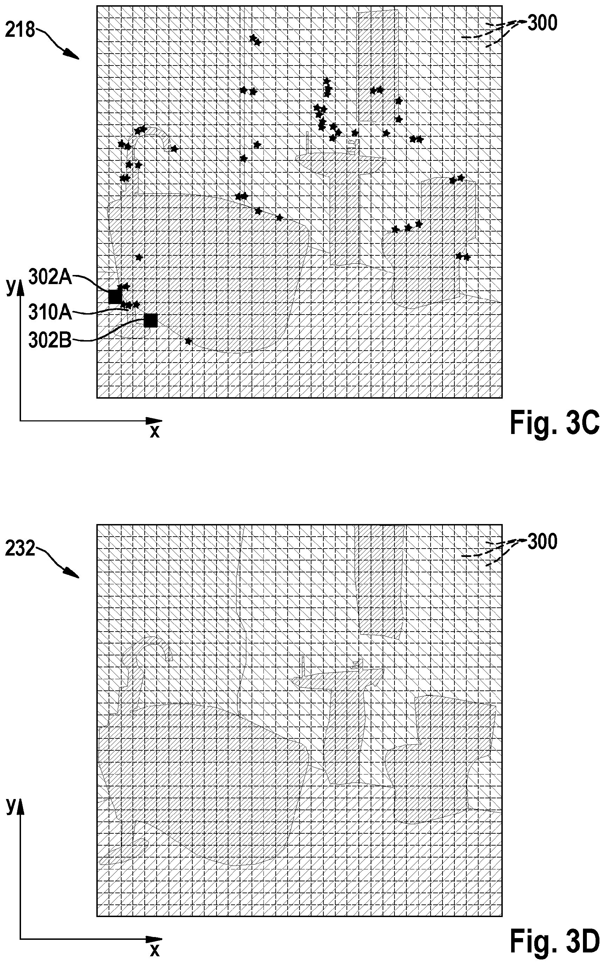

The computer 110 may be configured to select one or more selected second pixels for each first pixel of the first pixels. The computer 110 may be configured to select a selected second pixel of the selected pixels 228 for a first pixel of the first pixels using a pixel-selection-operation. The pixel-selection-operation may be applied to a first pixel of the first pixels. The pixel-selection-operation may include determining a first value randomly. The first value may be determined randomly within a first predefined range. The first value may be determined randomly using a first probability distribution (e.g., a uniform probability distribution). The pixel-selection-operation may include determining a second value randomly. The second value may be determined randomly within the first predefined range. The second value may be determined randomly within a second predefined range. The second value may be determined randomly using the first probability. The second value may be determined randomly using a second probability distribution (e.g., a uniform probability distribution). The pixel-selection-operation applied to a first pixel may include adding the first value to the first position value (e.g., to the x-coordinate) of the first pixel to determine the first position value (e.g., the x-coordinate) of the second pixel. The pixel-selection-operation may include adding the second value to the second position value (e.g., to the y-coordinate) of the first pixel to determine the second position value (e.g., the y-coordinate) of the second pixel. Illustratively, a selected second pixel is determined for a first pixel by randomly adding a first value to the x-coordinate of the first pixel and by randomly adding a second value to the y-coordinate of the first pixel. For example, with respect to FIG. 3C, the computer 110 may apply the pixel-selection-operation on the first pixel 310A in the segmentation image 218 and may determine a first value equal to "-1" and a second value equal to "1" using the pixel-selection-operation. Thus, the selected second pixel 302A of the selected second pixels 228 may have a position of "-1, 1" (e.g., one pixel in negative x-coordinate direction and one pixel in positive y-coordinate direction) with respect to the position of the first pixel 310A; illustratively, the selected second pixel 302A may be one pixel position to the left of the first pixel 310A and one pixel position above the first pixel 310A. For example, the computer 110 may apply the pixel-selection-operation a second time on the first pixel 310A and may determine a first value equal to "2" and a second value equal to "-1" using the pixel-selection-operation. Thus, the selected second pixel 302B may have a position of "2, -1" with respect to the position of the first pixel 310A; illustratively, the selected second pixel 302B may be two pixel positions to the right (e.g., in positive x-coordinate direction) of the first pixel 310A and one pixel position below (e.g., in negative y-coordinate direction) the first pixel 310A.

With respect to FIG. 2A and FIG. 2B, the computer 110 is configured to perform a two-dimensional distortion 230 on the segmentation image 218. The two-dimensional distortion 230 is applied to each pixel in the segmentation image 218. The computer 110 is configured to generate a distorted segmentation image 232 using the two-dimensional distortion 230 applied to the pixels in the segmentation image 218. The two-dimensional distortion 230 determines a corresponding pixel value of each pixel in the distorted segmentation image 232 using the first pixels and the selected second pixels 228. The number of pixels in the distorted segmentation image 232 may be equal to the number of pixels in the segmentation image 218. **FIG. 3D** shows an exemplary distorted segmentation image 232 according to various embodiments. The computer 110 may be configured to generate the distorted segmentation image 232 for the segmentation image 218.

The computer 110 is configured to apply the two-dimensional distortion 230 to each pixel in the segmentation image 218 using the first pixels and the selected second pixels 228 in the segmentation image 218. The computer 110 performs the two-dimensional distortion 230 on each of the pixels in the segmentation image 218 (e.g., including the first pixels and the selected second pixels 228).

The two-dimensional distortion 230 may include a transformer function, t. The transformer function may be applied to the segmentation image, s, (e.g., to each pixel in the segmentation image 218) and may be described by equation (1):

$$\hat{s} = t(s) \qquad\qquad (1)$$

wherein $\hat{s}$ is the distorted segmentation image.

The two-dimensional distortion 230 may include a thin-plate spline transform. The thin-plate spline transform may be applied to the pixels in the segmentation image 218 to generate the distorted segmentation image 232. The thin-plate spline transform may the first pixels and the selected second pixels 228 in the segmentation image 218 to determine a corresponding pixel value of each pixel in the distorted segmentation image 232.

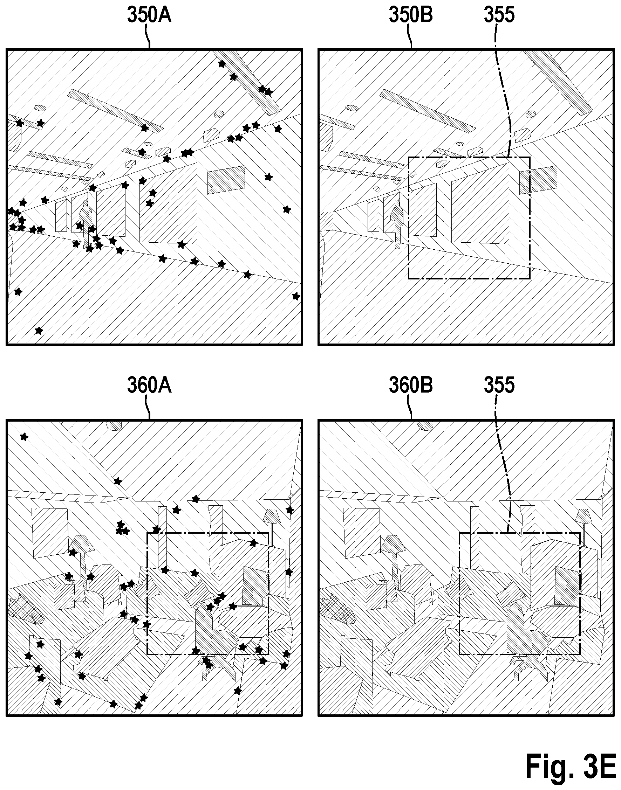

Illustratively, the first predefined range and/or the second predefined range used to determine the selected second pixels 228 may determine a degree of pixel shifting (e.g., an amount a pixel in the segmentation image 218 is shifted) via the thin-plate spline transform. The thin-plate spline transform may determine a corresponding pixel value of each pixel in the distorted segmentation image 232 using fixed pixels and moving pixels. For example, the first pixels may be used as fixed pixels and the selected second pixels 228 as may be used as moving pixels. The thin-plate spline transform may minimize a bending energy function for the selected second pixels 228 and the first pixels. For example, the bending energy function may be minimized by shifting the pixels (e.g., by determining a pixel shift for each pixel) in the segmentation image 218. A pixel shift may be associated with shifting the pixel value of the pixel to the determined shifted position. The pixel shift determined for a pixel may describe a pixel position (e.g., x-coordinate value and y-coordinate value) with respect to the pixel and the pixel value of the pixel at the pixel position may be changed to the pixel value of the pixel. Illustratively, the pixel value of the pixel may be shifted to the pixel at the determined pixel position. Illustratively, the two-dimensional distortion 230 (e.g., the thin-plate spline transform) may distort (e.g., warp) the segmentation image 218 based on the first pixels and the selected second pixels 228 selected for the first pixels using the pixel-selection-operation. **FIG. 3E** shows exemplary segmentation images and corresponding distorted segmentation images determined using the thin-plate spline transform, according to various embodiments. For example, applying the thin-plate spline transform on the segmentation image 350A may generated the distorted segmentation image 350B and applying the thin-plate spline transform on the segmentation image 360A may generated the distorted segmentation image 360B. The boxes 355 in the distorted segmentation image 350B and the distorted segmentation image 360B are included to highlight distorted segments shown in the respective distorted segmentation image.

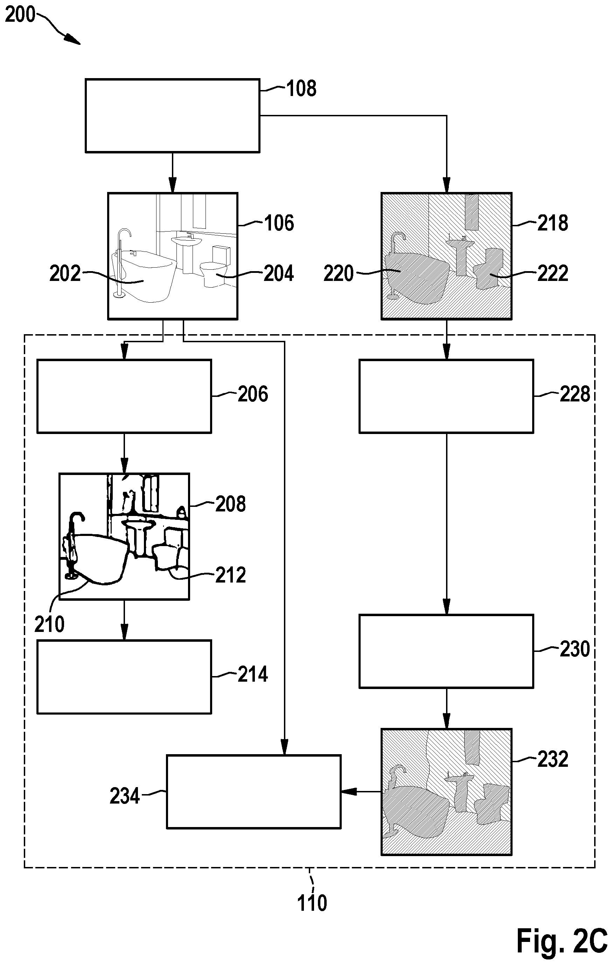

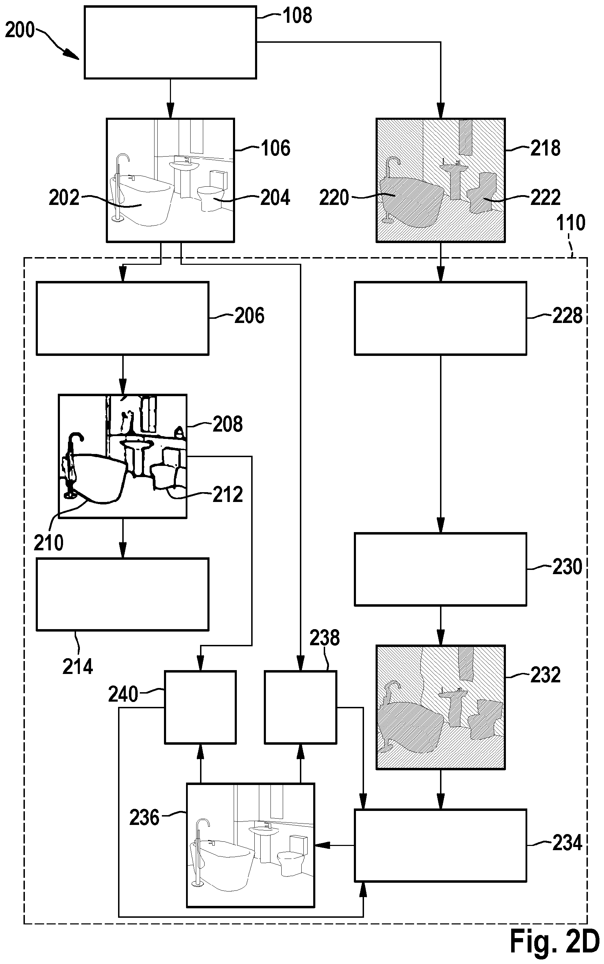

**FIG. 2C** and **FIG. 2D** each show the processing system 200 for training a generative neural network 234, according to various embodiments. The computer 110 is further configured to implement at least a part of the generative neural network 234. The computer 110 is configured to train the generative neural network 234 using the distorted segmentation image 232 as input image to estimate the digital image. The generative neural network 234 is configured to estimate a digital image in response to inputting a segmentation image. The generative neural network 234 is configured to estimate a digital image in response to inputting a distorted segmentation image. The estimated digital image may be a synthetic image. Illustratively, the generative neural network 234 tries to reconstruct the digital image 106 from the distorted segmentation image 232.

With respect to FIG. 2D, the generative neural network 234 may be configured to generate a synthetic image 236 in response to inputting the distorted segmentation image 234. For example, the synthetic image 236 may be a reconstruction of the digital image 106 based on the distorted segmentation image 232. The computer 110 may be configured to apply a first loss function to the synthetic image 236 and the digital image 106 to determine a generative loss value 238. The first loss function may be a mean square error (MSE). According to various aspects, the computer 110 may be configured to train the generative neural network 234 using the generative loss value 238. The generative neural network 234 may be trained to reduce (e.g., minimize) the generative loss value 238.

According to various aspects, the computer 110 may be configured to apply a second loss function to the synthetic image 236 and the edge image 208 to determine an edge loss value 240. The computer 110 may be configured to train the generative neural network 234 using the generative loss value 238 and the edge loss value 240. The generative neural network 234 may be trained to reduce the generative loss value 238 and the edge loss value 240. For example, the computer 110 may be configured to perform the edge detection 206 on the synthetic image 236 to generate a synthetic edge image. The synthetic edge image may include a plurality of edge pixels determined as representing edges of one or more digital objects shown in the synthetic image 236.

The second loss function used to determine the edge loss value 240 may be an L2 difference between the edge image 208 and the synthetic image 236 and may be described by equation (2):

$$\mathcal{L}_E = ||E(x) - E(G(\hat{s}))||_2 \qquad (2)$$

wherein G is the generative neural network 234 generating the synthetic image, $G(\hat{s})$, for the distorted segmentation image, $\hat{s}$, (e.g., generated using the segmentation image, s) and E is the edge detection 206 (e.g., an edge detection neural network) applied to the digital image, x, to generate the edge image 208, E(x). and applied to the synthetic image, $G(\hat{s})$, to generated the edge image, $E(G(\hat{s}))$. The second loss function may be used to determine the edge loss value 240, $\mathcal{L}_E$ .

According to various aspects, the computer 110 may be configured to implement at least a part of a discriminative neural network. The discriminative neural network may be configured to determine a first probability of the synthetic image 236 being a real image. A real image may be associated with an image detected by sensor as described herein with respect to the digital image 106. A real image may be associated with an image simulated by a simulation model. For example, an image may be a detected image or may be a synthetic image generated by any kind of machine-learning image generator. Illustratively, the first probability may a probability of the synthetic image 236 not being a synthetic image, e.g. generated by a machine-learning image generator. The generative neural network 238 may be trained to increase (e.g., to maximize) the first probability (e.g., a first probability value). A discriminative neural network (e.g., as used in generative adversarial networks) may determine whether an inputted image is a real image or a fake image. A fake image may be a synthetic image generated by a machine-learning image generator. A real image may be an image not generated by a machine-learning image generator. For example, the discriminative neural network may have been trained using a plurality of digital images labeled as real images and a plurality of digital images labeled as fake images and may be configured to determine, in response to inputting an image, a probability of the image being a real image (e.g., classified as real image) and/or a probability of the image being a fake image (e.g., classified as fake image).

The generative neural network 238 and the discriminative neural network may be part of or may form a generative adversarial network (GAN).

The discriminative neural network may be configured to determine a second probability of the digital image being a real image. The computer 110 may be configured to train the discriminative neural network using the first probability (e.g., given by a first probability value) and the second probability (e.g., given by a second probability value).

According to various aspects, the GAN (e.g., including the generative neural network 238 and the discriminative neural network) may be trained using the minimax loss function. The first loss function used to determine the generative loss value 240 may be described by equation (3):

$$\begin{matrix}\mathcal{L}_G\\min\end{matrix} = \mathbb{E}_s[logD(G(\hat{s}),\hat{s})] \qquad (3)$$

wherein D is the discriminative neural network determining the first probability of the synthetic image, $G(\hat{s})$, being a real image.

According to various aspects, a third loss function may be used to determine the generative loss value 240 and may include the first loss function and the second loss function and may be described by equation (4):

$$\begin{matrix}\mathcal{L}_G\\min\end{matrix} = \mathbb{E}_s[logD(G(\hat{s}),\hat{s})] + \lambda_E\mathbb{E}_{x,s}\mathcal{L}_E \qquad (4)$$

wherein $\lambda_E$ is an edge loss weight value.

The discriminative neural network may be trained using a fourth loss function. The fourth loss function may be described by equation (5):

$$\begin{matrix}\mathcal{L}_D\\max\end{matrix} = \mathbb{E}_{x,s}[logD(x,\hat{s})] + \mathbb{E}_s[log(1 - D(G(\hat{s}),\hat{s}))] \qquad (5).$$

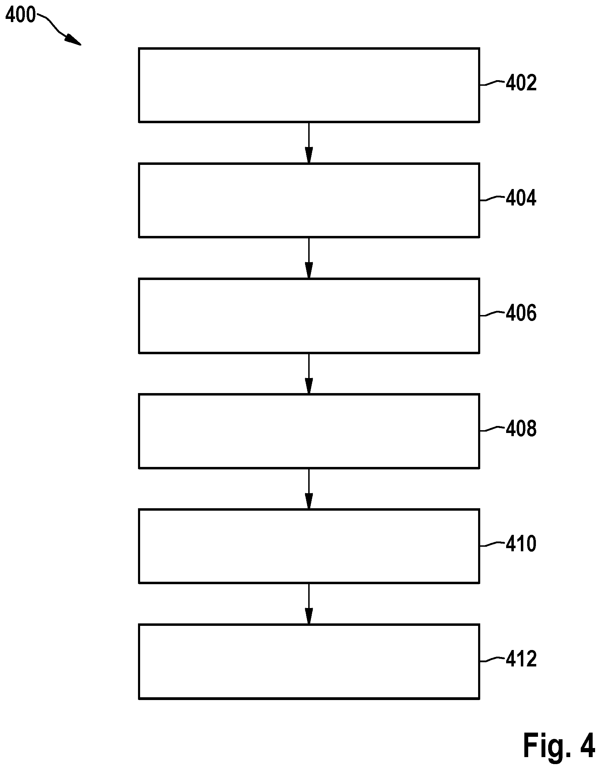

**FIG. 4** shows a method 400 of training a generative neural network according to various embodiments. The method 400 includes generating an edge image using an edge detection applied to a digital image (in 402). The digital image includes one or more digital objects. The edge image includes a plurality of edge pixels determined as representing edges of the one or more digital objects in the digital image.

The method 400 includes selecting edge-pixels from the plurality of edge pixels (in 404).

The method 400 may include generating a segmentation image using a segmentation applied to the digital image (in 406). The segmentation image includes one or more segments representing the one or more digital objects. The segmentation image includes a plurality of first pixels. The positions of the first pixels in the segmentation image correspond to the positions of the selected edge-pixels in the edge image

The method 400 includes selecting one or more second pixels for each first pixel in the segmentation image (in 408).

The method 400 includes generating a distorted segmentation image (in 410). The distorted segmentation image is generated using a two-dimensional distortion applied to the segmentation image. The two-dimensional distortion determines a pixel value of each pixel in the distorted segmentation image using the first pixels and the second pixels in the segmentation image.

The method 400 includes training the generative neural network using the distorted segmentation image as input image to estimate the digital image (in 412).

The method 400 may further include generating a training image using the trained generative neural network applied to a training segmentation image.

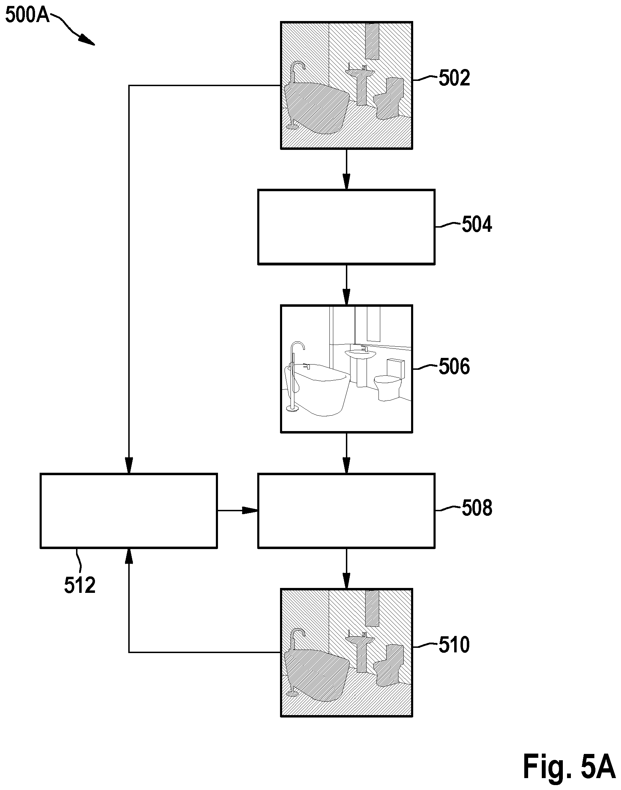

According to some aspects, the method 400 may further include training an image classifier using the generated training image to classify the training image (see, for example, FIG. 5A).

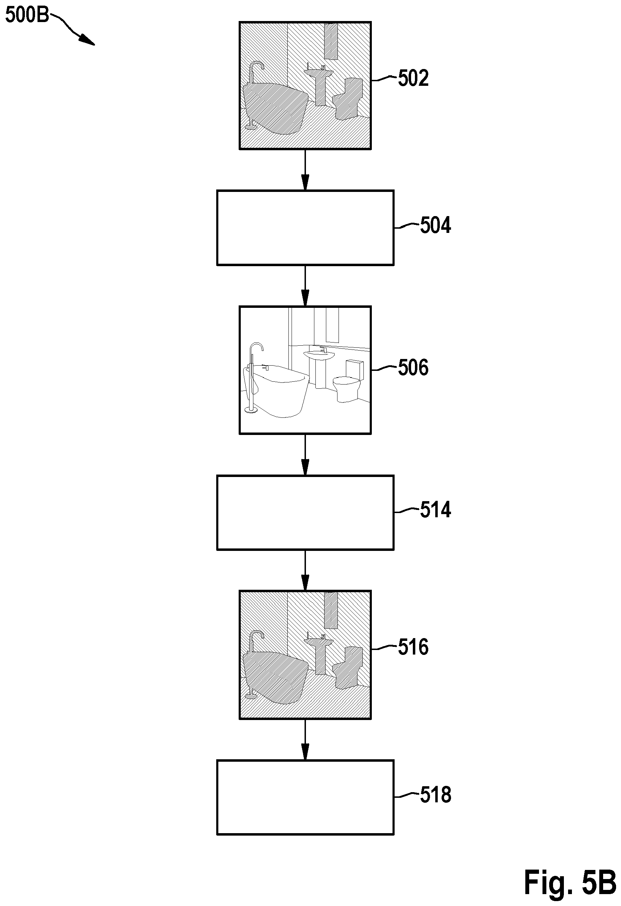

According to some aspects, the method 400 may include generating a classified image using a trained image classifier applied to the generated training image. The method 400 may further include determining a performance of the trained image classifier using the generated classified image and the training segmentation image (see, for example, FIG. 5B).

**FIG. 5A** shows a processing system 500A for training an image classifier 508 using a trained generative neural network 504, according to various embodiments.

A computer is configured to implement at least a part of the trained generative neural network 504. The trained generative neural network 504 has been trained using the method 400. The trained generative neural network 504 may have been trained using the processing system 200. The trained generative neural network 504 may be configured to process a training segmentation image 502 (e.g., a semantic segmentation image). The training segmentation image 502 may include one or more segments representing one or more digital objects in a corresponding digital image. The trained generative neural network 504 may be configured to estimate the digital image in response to inputting the training segmentation image 502. For example, the trained generative neural network 504 may be configured to generate a synthetic image 506 using the training segmentation image 502. The synthetic image 506 may include one or more digital objects associated with the one or more segments in the training segmentation image 502.

The computer may be configured to implement at least a part of the image classifier 508.

An image classifier as described herein may be any kind of algorithm that is capable to classify objects shown in a digital image and that is trained using digital images, such as a machine-learning classifier (e.g., a neural network, e.g., a segmentation model). The image classifier 508 may be configured to process the synthetic image 506. The image classifier 508 may be configured to classify the synthetic image 506. The image classifier 508 may be configured to generate a classified image 510 using the synthetic image 506. The classified image 510 may include a class associated with each object of the one or more objects in the synthetic image 506. For example, the classified image 510 may be a semantic segmentation of the synthetic image 506.

According to various aspects, the computer may be configured to apply a loss function to the training segmentation image 502 and the classified image 510 to determine a loss value 512. The computer may be further configured to train the image classifier 508 using the loss value 512. The computer may be configured to train the image classifier 508 such that the loss value 512 is reduced (e.g., minimized).

Illustratively, the trained generative neural network 504 be used to generate one or more training images using training segmentation images and the image classifier 508 may be trained using the training images and the training segmentation images as training data.

**FIG. 5B** shows a processing system 500B for testing a trained image classifier 514 using a trained generative neural network 504, according to various embodiments.

The processing system 500B may include the trained generative neural network 504. The processing system 500B may include a computer configured to implement at least a part of the trained generative neural network 504. The trained generative neural network 504 may generate the synthetic image 506 for the training segmentation image 502.

The computer may be configured to implement at least a part of the trained image classifier 514. The trained image classifier 514 may be configured to generate a classified image 516 for the synthetic image 506. The trained image classifier 514 may be configured to generate the classified image 516 in response to inputting the synthetic image 506.

The computer may be further configured determine a performance 518 of the trained image classifier 514 using the generated classified image 518 and the training segmentation image 502. According to various aspects, a loss function may be applied to the generated classified image 518 and the training segmentation image 502 to determine a loss value. The lower the loss value, the higher the performance 518 of the trained image classifier 514 may be. For example, the performance 518 of the trained image classifier 514 may increase with a decreasing loss value.

Illustratively, the trained generative neural network 504 be used to generate one or more training images using training segmentation images and the trained image classifier 508 may be tested using the generated training images and the training segmentation images as test data.

According to various aspects, the trained image classifier 514 may be validated using the synthetic image 506.

The trained generative neural network 504 may be used to generated synthetic images to train image classifiers (see, for example, FIG. 5A) or to test image classifiers (see, for example, FIG. 5B). Data augmentation by generating the synthetic images for segmentation images may allow the use (e.g., for training purposes, e.g., for testing purposes) of images in cases, where collecting digital images (e.g., by acquiring digital images using one or more sensors) is prohibitive (e.g., due to privacy reasons) or challenging (e.g., due to corner cases).

For example, digital images that are prohibited due to privacy reasons (e.g., digital images showing a person and/or other confidential information) may be processed by a segmentation model to generated a segmentation image and the generated segmentation image may be inputted to the trained generative neural network 504 to generated a synthetic image. Illustratively, a synthetic image is generated for the digital image such that the person shown in the digital image is not recognizable in the synthetic image. Illustratively, the synthetic image is an anonymized version of the digital image.

For example, it may be difficult to collect digital images that show corner cases, such as near-accident driving scenes, and/or rare objects, such as wild animals. According to various aspects, segmentation images may be generated including a segmentation (e.g., semantic segmentation) of various corner cases and/or including segments associated with rare objects. The trained generative neural network 504 may generate synthetic images for the generated segmentation images. Illustratively, a synthetic image is generated that shows a corner case and/or rare objects.

An image classifier may be trained using a training dataset that includes a plurality of images. Each image of the plurality of images may include one or more digital objects. However, some digital objects may be shown in a high number of images of the plurality of images and some digital objects may be shown in only a few images. The image classifier trained on the plurality of images may have an intrinsic bias towards the digital objects shown in a high number. Training the image classifier using the synthetic images that show the digital objects which are only present in a few images (e.g., rare classes) may mitigate the intrinsic bias of the trained image classifier. This may have the effect that a generalization of the trained image is improved. Illustratively, by including synthetic images that show the digital objects which are only present in a few images to the training dataset, the training dataset may be balanced.

According to various aspects, the trained generative neural network 504 may be used to generate a plurality of synthetic images for segmentation images to enlarge a dataset for training an image classifier.

**Claims**

1. A computer-implemented method (400) of training a generative neural network, the method (400) comprising

   • generating (402) an edge image using an edge detection applied to a digital image, the digital image comprising one or more digital objects, the edge image comprising a plurality of edge pixels determined as representing edges of the one or more digital objects in the digital image;
   • selecting (404) edge-pixels from the plurality of edge pixels;
   • providing (406) a segmentation image using the digital image, the segmentation image comprising one or more segments representing the one or more digital objects, wherein the segmentation image comprises a plurality of first pixels, the positions of the first pixels in the segmentation image corresponding to the positions of the selected edge-pixels in the edge image;
   • selecting (408) one or more second pixels for each first pixel in the segmentation image;

   the method **characterized in that** it comprises:

   • generating (410) a distorted segmentation image using a two-dimensional distortion applied to the segmentation image, wherein the two-dimensional distortion determines a pixel value of each pixel in the distorted segmentation image using the first pixels and the second pixels; and
   • training (412) the generative neural network using the distorted segmentation image as input image to estimate the digital image.

2. The method (400) of claim 1, further comprising

   • generating a training image using the trained generative neural network applied to a training segmentation image; and
   • training an image classifier using the generated training image to classify the training image.

3. The method (400) of claim 1, further comprising:

   • generating a training image using the trained generative neural network applied to a training segmentation image;
   • generating a classified image using a trained image classifier applied to the generated training image;
   • determining a performance of the trained image classifier using the generated classified image and the training segmentation image.

4. The method (400) of any one of claims 1 to 3,
   wherein selecting (404) edge-pixels from the plurality of edge pixels comprises
   selecting the edge-pixels from the plurality of edge pixels using a statistical probability distribution.

5. The method (400) of any one of claims 1 to 4,
   wherein the two-dimensional distortion applied to the segmentation image comprises a thin-plate spline transformation.

6. The method (400) of any one of claims 1 to 5,
   wherein selecting (408) a second pixel for a first pixel comprises:
   adding a displacement to the position of the first pixel to determine the position of the second pixel.

7. The method (400) of any one of claims 1 to 6,
   wherein training (412) the generative neural network using the distorted segmentation image as input image to estimate the digital image comprises:

• estimating the digital image using the generative neural network applied to the distorted segmentation image;
• applying a first loss function to the estimated digital image and the digital image to determine a generative loss value;
• applying a second loss function to the estimated digital image and the edge image to determine an edge loss value; and
• training the generative neural network to reduce the generative loss value and the edge loss value.

8. A device comprising a computer (110), wherein the computer (110) is configured to perform the method (400) of any one of claims 1 to 7.

9. A computer program comprising instructions which, if executed by a computer (110), make the computer (110) perform the method (400) according to any one of claims 1 to 7.

10. A computer readable medium storing instructions which, if executed by a computer (110), make the computer (110) perform the method (400) according to any one of claims 1 to 7.

**Patentansprüche**

1. Computerimplementiertes Verfahren (400) zum Trainieren eines generativen neuronalen Netzwerks, wobei das Verfahren (400) Folgendes umfasst:

• Erzeugen (402) eines Kantenbildes unter Verwendung einer auf ein digitales Bild angewendeten Kantenerkennung, wobei das digitale Bild ein oder mehrere digitale Objekte umfasst, wobei das Kantenbild eine Vielzahl von Kantenpixeln umfasst, die als Kanten des einen oder der mehreren digitalen Objekte in dem digitalen Bild darstellend bestimmt wurden;
• Auswählen (404) von Kantenpixeln aus der Vielzahl von Kantenpixeln;
• Bereitstellen (406) eines Segmentierungsbildes unter Verwendung des digitalen Bildes, wobei das Segmentierungsbild ein oder mehrere Segmente umfasst, die das eine oder die mehreren digitalen Objekte darstellen, wobei das Segmentierungsbild eine Vielzahl von ersten Pixeln umfasst, wobei die Positionen der ersten Pixel in dem Segmentierungsbild den Positionen der ausgewählten Kantenpixel in dem Kantenbild entsprechen;
• Auswählen (408) eines oder mehrerer zweiter Pixel für jedes erste Pixel in dem Segmentierungsbild;

wobei das Verfahren **dadurch gekennzeichnet ist, dass** es Folgendes umfasst:

• Erzeugen (410) eines verzerrten Segmentierungsbildes unter Verwendung einer auf das Segmentierungsbild angewandten zweidimensionalen Verzerrung, wobei die zweidimensionale Verzerrung einen Pixelwert jedes Pixels in dem verzerrten Segmentierungsbild unter Verwendung der ersten Pixel und der zweiten Pixel bestimmt; und
• Training (412) des generativen neuronalen Netzwerks unter Verwendung des verzerrten Segmentierungsbildes als Eingangsbild zur Schätzung des digitalen Bildes.

2. Verfahren (400) nach Anspruch 1, das ferner Folgendes umfasst:

• Erzeugen eines Trainingsbildes unter Verwendung des trainierten generativen neuronalen Netzwerks, das auf ein Trainingssegmentierungsbild angewendet wird; und
• Trainieren eines Bildklassifizierers unter Verwendung des erzeugten Trainingsbildes, um das Trainingsbild zu klassifizieren.

3. Verfahren (400) nach Anspruch 1, das ferner Folgendes umfasst:

• Erzeugen eines Trainingsbildes unter Verwendung des trainierten generativen neuronalen Netzwerks, das auf ein Trainingssegmentierungsbild angewendet wird;
• Erzeugung eines klassifizierten Bildes unter Verwendung eines trainierten Bildklassifizierers, der auf das erzeugte Trainingsbild angewendet wird;
• Bestimmung der Leistung des trainierten Bildklassifizierers unter Verwendung des erzeugten klassifizierten Bildes und des Trainingssegmentierungsbildes.

4. Verfahren (400) nach einem der Ansprüche 1 bis 3, wobei das Auswählen (404) von Kantenpixeln aus der Vielzahl von Kantenpixeln Folgendes umfasst:
Auswählen der Kantenpixel aus der Vielzahl der Kantenpixel unter Verwendung einer statistischen Wahrscheinlichkeitsverteilung.

5. Verfahren (400) nach einem der Ansprüche 1 bis 4, wobei die auf das Segmentierungsbild angewendete zweidimensionale Verzerrung eine dünne Spline-Transformation umfasst.

6. Verfahren (400) nach einem der Ansprüche 1 bis 5, wobei das Auswählen (408) eines zweiten Pixels für ein erstes Pixel Folgendes umfasst:
Hinzufügen einer Verschiebung zu der Position des ersten Pixels, um die Position des zweiten Pixels zu bestimmen.

7. Verfahren (400) nach einem der Ansprüche 1 bis 6, wobei das Trainieren (412) des generativen neuronalen Netzwerks unter Verwendung des verzerrten Segmentierungsbildes als Eingangsbild zur Schätzung des digitalen Bildes Folgendes umfasst:

   • Schätzen des digitalen Bildes mit Hilfe des generativen neuronalen Netzwerks, das auf das verzerrte Segmentierungsbild angewendet wird;
   • Anwenden einer ersten Verlustfunktion auf das geschätzte digitale Bild und das digitale Bild, um einen generativen Verlustwert zu bestimmen;
   • Anwenden einer zweiten Verlustfunktion auf das geschätzte digitale Bild und das Kantenbild, um einen Kantenverlustwert zu bestimmen; und
   • Trainieren des generativen neuronalen Netzwerks, um den generativen Verlustwert und den Kantenverlustwert zu reduzieren.

8. Gerät, das einen Computer (110) umfasst, wobei der Computer (110) so konfiguriert ist, dass er das Verfahren (400) nach einem der Ansprüche 1 bis 7 durchführt.

9. Computerprogramm, das Anweisungen umfasst, die, wenn sie von einem Computer (110) ausgeführt werden, den Computer (110) veranlassen, das Verfahren (400) nach einem der Ansprüche 1 bis 7 durchzuführen.

10. Computerlesbares Medium, das Anweisungen speichert, die, wenn sie von einem Computer (110) ausgeführt werden, den Computer (110) veranlassen, das Verfahren (400) nach einem der Ansprüche 1 bis 7 durchzuführen.

**Revendications**

1. Procédé mis en œuvre par ordinateur (400) pour l'apprentissage d'un réseau neuronal génératif, le procédé comprenant :

   • la génération (402) d'une image de bord à l'aide d'une détection de bord appliquée à une image numérique, l'image numérique comprenant un ou plusieurs objets numériques, l'image de bord comprenant une pluralité de pixels de bord déterminée représenter des bords des un ou plusieurs objets numériques de l'image numérique ;
   • la sélection de (404) de pixels de bord parmi la pluralité de pixels de bord ;
   • la fourniture (406) d'une image de segmentation à l'aide de l'image numérique, l'image de segmentation comprenant un ou plusieurs segments représentant les un ou plusieurs objets numériques, dans lequel l'image de segmentation comprend une pluralité de premiers pixels, les positions des premiers pixels dans l'image de segmentation correspondant aux positions des pixels de bord sélectionnés dans l'image de bord ;
   • la sélection (408) d'un ou plusieurs deuxièmes pixels pour chaque premier pixel de l'image de segmentation ;

   le procédé étant **caractérisé en ce qu'**il comprend :

   • la génération (410) d'une image de segmentation déformée à l'aide d'une distorsion bidimensionnelle appliquée à l'image de segmentation, dans lequel la distorsion bidimensionnelle détermine une valeur de pixel de chaque pixel dans l'image de segmentation déformée à l'aide des premiers pixels et des deuxièmes pixels ; et
   • l'apprentissage (412) du réseau neuronal génératif à l'aide de l'image de segmentation déformée comme image d'entrée pour estimer l'image numérique.

**2.** Procédé (400) selon la revendication 1, comprenant en outre :

• la génération d'une image d'apprentissage à l'aide du réseau neuronal génératif formé appliqué à une image de segmentation d'apprentissage ; et
• l'apprentissage d'un classificateur d'images à l'aide de l'image d'apprentissage générée pour classifier l'image d'apprentissage.

**3.** Procédé (400) selon la revendication 1, comprenant en outre :

• la génération d'une image d'apprentissage à l'aide du réseau neuronal génératif entraîné appliqué à une image de segmentation d'apprentissage ;
• la génération d'une image classifiée à l'aide d'un classificateur d'image formé appliqué à l'image d'apprentissage générée ;
• la détermination d'une performance du classificateur d'images formé à l'aide de l'image classifiée générée et de l'image de segmentation d'apprentissage.

**4.** Procédé (400) selon l'une quelconque des revendications 1 à 3,
dans lequel la sélection (404) de pixels de bord parmi la pluralité de pixels de bord comprend :

• la sélection des pixels de bord parmi la pluralité de pixels de bord à l'aide d'une distribution de probabilité statistique.

**5.** Procédé (400) selon l'une quelconque des revendications 1 à 4,
dans lequel la distorsion bidimensionnelle appliquée à l'image de segmentation comprend une transformation de spline à plaques minces.

**6.** Procédé (400) selon l'une quelconque des revendications 1 à 5,
dans lequel la sélection (408) d'un deuxième pixel pour un premier pixel comprend :
l'ajout d'un déplacement à la position du premier pixel pour déterminer la position du deuxième pixel.

**7.** Procédé (400) selon l'une quelconque des revendications 1 à 6,
dans lequel l'apprentissage (412) du réseau neuronal génératif à l'aide de l'image de segmentation déformée comme image d'entrée pour estimer l'image numérique comprend :

• l'estimation de l'image numérique à l'aide du réseau neuronal génératif appliqué à l'image de segmentation déformée ;
• l'application d'une première fonction de perte à l'image numérique estimée et à l'image numérique pour déterminer une valeur de perte générative ;
• l'application d'une deuxième fonction de perte à l'image numérique estimée et à l'image de bord pour déterminer une valeur de perte de bord ; et
• l'apprentissage du réseau neuronal génératif pour réduire la valeur de perte générative et la valeur de perte de bord.

**8.** Dispositif comprenant un ordinateur (110), dans lequel l'ordinateur (110) est configuré pour réaliser le procédé (400) selon l'une quelconque des revendications 1 à 7.

**9.** Programme d'ordinateur comprenant des instructions qui, si elles sont exécutées par un ordinateur. (110), amènent l'ordinateur (110) à réaliser le procédé (400) selon l'une quelconque des revendications 1 à 7.

**10.** Support lisible par ordinateur stockant des instructions qui, si elles sont exécutées par un ordinateur (110), amènent l'ordinateur (110) à réaliser le procédé (400) selon l'une quelconque des revendications 1 à 7.

100

102

106

104

108

110

Fig. 1

Fig. 2A

Fig. 2B

200

108

106

202   204

218

220   222

206

228

208

212

210

214

230

234

232

110

**Fig. 2C**

Fig. 2D

Fig. 3A

Fig. 3B

Fig. 3C

Fig. 3D

Fig. 3E

400

402

404

406

408

410

412

Fig. 4

500A

502

504

506

508

510

512

**Fig. 5A**

500B

502

504

506

514

516

518

Fig. 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VERMA et al.** Manifold mixup: Better representations by interpolating hidden states. *Proceedings of the 36th International Conference on Machine Learning,* 2019, 6438-6447
- **ANTONIOU et al.** Data augmentation generative adversarial networks. *arXiv:1711.04340,* 2017
- **ARJOVSKY et al.** Towards principled methods for training generative adversarial networks. *International Conference on Learning Representations,* 2017